# DEMANDE DE BREVET EUROPEEN

(11) **EP 0 838 716 A1**
(43) Date de publication de la demande: **29.04.1998**
(21) Numéro de dépôt: 97402466.3
(22) Date de dépôt: 20.10.1997
(51) Int. Cl.: G03B 17/40

(54) **Appareil photographique à déclenchement automatique à un instant fixe par construction**

(30) Priorité: 25.10.1996 FR 9613025
(71) Demandeur: Vetois, Philippe, 75014 Paris (FR)
(72) Inventeur: Vetois, Philippe, 75014 Paris (FR)

(57) **Abrégé**

L'appareil proposé est à usage unique, prêt à l'emploi et conçu pour réaliser un seul cliché à un instant fixé par construction avec une précision inférieure à ½ seconde par rapport à l'heure officielle de la communauté européenne.

Une horloge électronique à quartz est intégrée dans le boîtier de l'appareil et est utilisée comme référence temporelle par le système électronique qui contrôle le déclenchement automatique de l'obturateur. Cette horloge électronique à quartz est radio pilotée par l'émetteur de l'horloge de l'institut Physico Technique de Brunswick en Allemagne qui constitue la référence horaire officielle de la communauté européenne. Un dispositif de réglage permet d'ajouter ou de retrancher une ou plusieurs heures à l'heure officielle, pour le cas où l'opérateur désirerait compenser un éventuel décalage entre l'heure locale du lieu d'utilisation de l'appareil et l'heure officielle de la communauté européenne. Dans ce cas, cette heure locale est utilisée comme référence par le système de déclenchement automatique. Un système électronique d'affichage digital permet à l'utilisateur de visualiser l'heure officielle ou l'heure locale.

Cet appareil photographique est plus particulièrement destiné à enregistrer une scène durant la dernière seconde du 31 décembre 1999 ou durant la première seconde du 1 er janvier 2000.

## Description

Appareil photographique, à usage unique, prêt à l'emploi, conçu pour réaliser un seul cliché à un instant fixé par construction avec une précision inférieure à ½ seconde par rapport à l'heure officielle de la communauté européenne.

L'amateur qui désirerait photographier une scène durant les instants particuliers que seront la dernière seconde du 31 décembre 1999 ou la première seconde du 1er janvier 2000 disposerait de deux solutions. Première solution: l'opérateur déclenche lui-même directement la prise de vue, alors l'exactitude du moment photographié est dépendante de l'heure de référence utilisée et des reflexes de l'opérateur, opérateur qui de plus, dans ce cas, ne peut pas figurer sur le cliché. Deuxième solution: l'opérateur utilise un retardateur de prise de vue, dans ce cas, il peut figurer sur le cliché mais l'exactitude est toujours dépendante de l'heure de référence utilisée, de la maîtrise par l'opérateur des caractéristiques techniques du dispositif de retardement et enfin de la précision de ce dispositif.

L'appareil photographique proposé, évite ces imprécisions et libère l'opérateur des manipulations lors de la prise de vue. En effet, une horloge électronique à quartz est intégrée dans le boîtier de l'appareil et est utilisée comme référence temporelle par le système électronique qui contrôle le déclenchement automatique de l'obturateur à l'instant fixé par construction.

Selon des modes particuliers de réalisation:
- La référence temporelle intégrée peut être une horloge électronique à quartz radio pilotée par les signaux hertziens de l'émetteur de l'horloge de l'institut Physico Technique de Brunswick en Allemagne qui est la référence horaire officielle de la communauté européenne. Après mise sous tension de l'appareil, le radio pilotage permet le réglage de l'horloge intégrée à l'heure officielle, ceci dès la réception du signal radio de référence. Une tentative de synchronisation depuis le signal radio est régulièrement effectuée toutes les heures, par exemple, pour corriger les défauts de marche de l'horloge intégrée. La réception régulière de ces signaux hertziens permet d'opérer la prise de vue avec une précision inférieure à une ½ seconde par rapport à l'heure officielle de la communauté européenne.
- Le moment du déclenchement automatique est choisi et programmé à la fabrication; il peut être défini sous forme d'une date: année, mois, jour, et d'une heure: heure, minute, seconde et dixième de seconde. Une fois fixé par le constructeur, ce moment ne peut plus être modifié par l'utilisateur.
- L'horloge peut posséder un dispositif de réglage permettant d'ajouter ou de retrancher une ou plusieurs heures à l'heure officielle, pour le cas où l'opérateur désirerait compenser un éventuel décalage entre l'heure locale du lieu d'utilisation de l'appareil et l'heure officielle de la communauté européenne. Dans ce cas, cette heure locale est utilisée comme référence par le système de déclenchement automatique.
- Cette horloge intégrée peut être pourvue d'un système électronique d'affichage digital permettant à l'utilisateur de visualiser l'heure officielle et l'heure locale pour en effectuer le réglage si besoin.
- L'appareil peut comprendre un système d'alerte sonore pour signaler à l'utilisateur l'imminence du déclenchement.

Cet appareil photographique devant réaliser automatiquement une seule vue une seule fois, les fonctions présentes sur les appareils photographiques classiques se trouvent simplifiées ou supprimées.
- Les organes nécessaires au chargement et transport du film peuvent être supprimés, le film sensible étant mis en place lors de la fabrication de l'appareil.
- De même le déclencheur manuel de prise de vue peut être supprimé.
- L'objectif peut être à mise au point fixe.
- Le film peut être du 35 millimètres standard pour réaliser un cliché négatif format 24x36 millimètres.
- L'obturateur peut être de type central situé derrière l'objectif et conçu pour opérer, par exemple, au 1/60 de seconde. Son mécanisme est armé lors de sa fabrication, il est actionné l'instant venu par rupture d'un filament métallique qui est échauffé par le passage d'un courant électrique.
- Cet appareil peut comprendre un flash au magnésium intégré et synchronisé au déclenchement de l'obturateur.

## Revendications

1. Appareil photographique, à usage unique, prêt à l'emploi, conçu pour réaliser un seul cliché et caractérisé par le fait qu'une horloge intégrée commande le déclenchement automatique de l'obturateur à un instant fixé par construction avec une précision inférieure à une ½ seconde par rapport à l'heure officielle de la communauté européenne.

2. Appareil photographique suivant la revendication 1 dont l'horloge intégrée est une horloge électronique à quartz radio pilotée par l'émetteur de l'horloge de l'institut Physico Technique de Brunswick en Allemagne qui délivre l'heure officielle de la communauté européenne.

3. Appareil photographique suivant les revendications 1 et 2 dont l'horloge intégrée possède un dispositif de réglage pour ajouter ou retrancher une ou plusieurs heures à l'heure officielle, permettant de compenser un éventuel décalage entre l'heure locale du lieu d'utilisation de l'appareil et l'heure officielle de la communauté européenne. Un système électronique d'affichage digital permet à l'utilisateur de visualiser l'heure officielle ou l'heure locale.

4. Appareil photographique suivant les revendications 1 à 3 dont le déclenchement automatique de l'obturateur est commandé par l'horloge intégrée en fonction d'une heure locale si l'utilisateur a effectué les réglages adéquats.

5. Appareil photographique suivant la revendication 1 dont l'instant de déclenchement automatique fixé à la construction est situé durant la dernière seconde du 31 Décembre 1999.

6. Appareil photographique suivant la revendication 1 dont l'instant de déclenchement automatique fixé à la construction est situé durant la première seconde du 1er Janvier 2000.

7. Appareil photographique suivant la revendication 1 dont le mécanisme de l'obturateur est est actionné l'instant venu par rupture d'un filament métallique échauffé par le passage d'un courant électrique.
